# DEMANDE DE BREVET EUROPEEN

(11) **EP 4 468 686 A1**
(43) Date de publication de la demande: **27.11.2024**
(21) Numéro de dépôt: 24177117.9
(22) Date de dépôt: 21.05.2024
(51) Int. Cl.: H04L 67/568

(54) **BASCULEMENT OPTIMISÉ DEPUIS UN SERVEUR DE CONTENU UNICAST VERS UN SERVEUR DE CONTENU MULTICAST**

(30) Priorité: 22.05.2023 FR 2305026
(71) Demandeur: Orange, 92130 Issy-les-Moulineaux (FR)
(72) Inventeur: MARCHAND, Hervé, 92326 CHATILLON CEDEX (FR); RIVOALEN, Mathieu, 92326 CHATILLON CEDEX (FR)
(74) Mandataire: Regimbeau

(57) **Abrégé**

[Procédé de gestion de l'accès par un dispositif de lecture (T) à des segments d'un contenu accessibles depuis des serveurs de contenu (Su, SM), comprenant un démarrage de l'obtention de segments depuis un premier serveur (Su), et une poursuite de l'obtention de segments depuis un second serveur (S_{M}) lorsqu'une condition sur un environnement dudit dispositif de lecture (T) est atteinte.

## Description

### DOMAINE DE L'INVENTION

La présente invention concerne le domaine de la transmission sur un réseau de télécommunication de flux de données, notamment comportant du contenu multimédia numérique, à savoir de contenus audio et/ou vidéo numériques, également appelés contenus audiovisuels.

Elle concerne plus particulièrement la gestion de l'accès par un dispositif de lecture à des segments d'un contenu accessibles depuis des serveurs de contenu. Ce contenu peut être un contenu multimédia (vidéo ou audio-vidéo par exemple) qui peut être en temps-réel (appelé contenu « live » par l'homme du métier, ou direct), ou à la demande (VoD pour « Video on Demand », toujours en anglais).

De façon classique, un flux de données, notamment de contenu multimédia, est divisé en segments.

Ces segments peuvent être obtenu selon différentes modalités. Notamment, les segments peuvent être obtenus selon un mode unicast, par exemple selon le mode U-ABR (pour « unicast adaptive bitrate » en anglais), ou selon un mode multicast, par exemple selon le mode M-ABR (pour « multicast adaptive bitrate » en anglais).

Les modes U-ABR et M-ABR permettent de télécharger des segments de contenu selon une technique de téléchargement adaptatif progressif (ou « adaptative streaming » en anglais) par l'homme du métier.

Dans un mode d'obtention (ou transmission) unicast, les segments sont transmis entre un émetteur (serveur de contenu...) et un destinataire (un dispositif de lecture...). Lorsque plusieurs dispositifs de lecture souhaitent obtenir un même contenu, les segments sont transmis à chacun de façon indépendante, en autant de flux de segments.

Le mode d'obtention (ou transmission) multicast vise à mutualiser la transmission vers plusieurs destinataires. Les destinataires qui souhaitent obtenir le contenu demandent à s'abonner à ce service de transmission multicast. Un mécanisme est alors mis en place pour raccorder ces nouveaux destinataires à un arbre de distribution existant. Ce raccordement vise à optimiser la mutualisation de la transmission en prenant en compte la topologie du réseau.

Ainsi, plus on est près de la source de contenu, plus il y a mutualisation, c'est-à-dire qu'un même segment n'est transmis qu'une unique fois pour un ensemble de destinataires distincts. On atteint ainsi un gain substantiel en bande-passante.

Toutefois, le choix entre l'un ou l'autre des modes d'obtention des segments de contenu pose la problématique d'un équilibre entre le gain en bande passante apporté par le mode « multicast » et le temps d'établissement de celui-ci qui peut être pénalisant pour le terminal, notamment lorsque l'utilisateur bascule d'un contenu à un autre (zapping d'une chaîne à une autre par exemple). Cela peut également être le cas lorsqu'un changement de qualité est nécessaire.

Le lapse de temps nécessaire à l'établissement d'un flux de segments en mode multicast pourrait provoque une famine du terminal qui ne pourra alors plus produire le contenu multimédia à l'utilisateur. Dans le cas d'un contenu vidéo, celui-ci sera interrompu sur la dernière image décodée à partir du dernier segment reçu (gel de la vidéo).

Une telle situation n'est pas acceptable pour les utilisateurs, et il existe donc un besoin d'améliorer les propositions actuelles de l'état de la technique.

### RESUME DE L'INVENTION

L'invention vise à améliorer l'expérience générale des utilisateurs de dispositifs de lecture.

À ces fins, selon un premier aspect, la présente invention peut être mise en oeuvre par un procédé de gestion de l'accès par un dispositif de lecture à des segments d'un contenu accessibles depuis des serveurs de contenu, comprenant un démarrage de l'obtention de segments depuis un premier serveur, et une poursuite de l'obtention de segments depuis un second serveur lorsqu'une condition sur un environnement dudit dispositif de lecture est atteinte.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit premier serveur est associé à un mode d'obtention unicast, et/ou ledit second serveur est associé à un mode d'obtention multicast. Ainsi, on peut déclencher une bascule d'un mode d'obtention des segments de contenu unicast à multicast en fonction de l'environnement du dispositif de lecture, notamment afin de pouvoir prendre en compte sa situation locale
- ladite condition sur l'environnement dudit dispositif de lecture comprend une condition sur des informations associées aux segments obtenus par ledit dispositif de lecture. Ces informations permettent de prendre en compte le contenu d'une mémoire tampon du dispositif de lecture pour décider de déclencher ou non un basculement vers le second serveur de contenu.
- ledit dispositif de lecture transmet des informations sur son environnement à ladite entité de gestion, et ladite entité de gestion détermine si ladite condition est atteinte en fonction desdites informations. Cette entité de gestion peut ainsi gérer le choix du moment de basculement en fonction des informations transmises par l'entité de gestion sur son environnement. Ce mode de réalisation permet de centraliser les fonctionnalités spécifiques dans l'entité de gestion et d'être ainsi compatible avec tout dispositif de lecture.
- lesdites informations sont transmises avec des requêtes de segments transmises par ledit dispositif de lecture. On économise ainsi les échanges de messages sur le réseau local, et l'entité de gestion dispose ainsi des informations nécessaires au moment de choisir auprès de quel serveur de contenu requérir le segment demandé.
- lesdites informations comprennent une durée associée aux segments présents dans la mémoire tampon dudit dispositif de lecture. L'entité de gestion peut ainsi choisir auprès de quel serveur de contenu requérir le segment demandé en fonction de la durée de contenu présent dans la mémoire tampon du dispositif de lecture et peut estimer si cette durée permet d'absorber le temps nécessaire au basculement vers le second serveur de contenu.
- Lesdites informations peuvent également ou alternativement comprendre un nombre de segments présents dans la mémoire tampon dudit dispositif de lecture. Ce mode de réalisation permet également à l'entité de gestion d'estimer si le contenu de la mémoire tampon permet d'absorber le temps nécessaire au basculement vers le second serveur de contenu.

Un autre aspect de l'invention concerne une entité de gestion de l'accès par un dispositif de lecture à des segments d'un contenu accessibles depuis des serveurs de contenu, comprenant un processeur configuré pour réaliser un démarrage de l'obtention de segments depuis un premier serveur, et une poursuite de l'obtention de segments depuis un second serveur lorsqu'une condition sur un environnement dudit dispositif dudit dispositif de lecture est atteinte

Un autre aspect de l'invention concerne une passerelle, par exemple une passerelle domestique, comportant une entité de gestion telle que précédemment décrite.

Un autre aspect de l'invention concerne un programme d'ordinateur apte à être mis en oeuvre sur un dispositif de supervision, le programme comprenant des instructions de code qui, lorsqu'il est exécuté par un processeur, réalise les étapes du procédé tel que précédemment décrit.

Un autre aspect de l'invention concerne un support de données sur lequel a été mémorisé au moins une série d'instructions de code de programme pour l'exécution d'un procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les dessins annexés illustrent l'invention :
- la figure 1 illustre un réseau de télécommunication permettant la mise en oeuvre d'un procédé selon des modes de réalisation de l'invention ;
- la figure 2 schématise un chronogramme, selon une mise en oeuvre de l'invention.

### DESCRIPTION DETAILLEE DE MODES DE REALISATION DE L'INVENTION

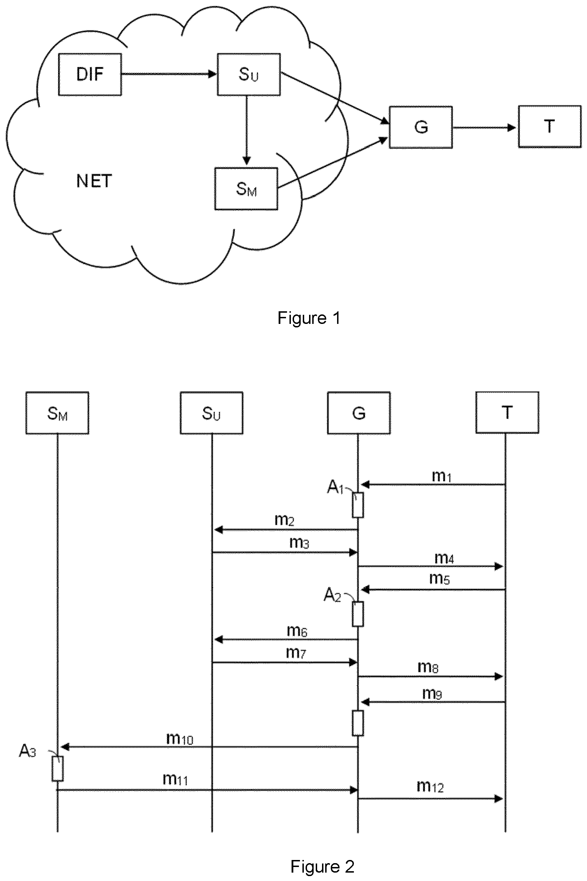

La figure 1 illustre un réseau de télécommunication, NET, permettant l'acheminement de flux de données, formés de segments de contenu, vers un ou plusieurs terminaux ou dispositif de lecture T.

Ces terminaux ou dispositifs de lecture peuvent être de différents types, tel que notamment un terminal mobile, un téléviseur connecté, un ordinateur, etc.

Le terminal mobile peut typiquement être un téléphone intelligent de type « smartphone » ou une tablette numérique, adapté pour recevoir des flux multimédias et à les produire sur une interface du terminal ou connecté audit terminal.

Le téléviseur TV peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans ce dernier cas, le dispositif de lecture de contenu multimédia peut être ce dispositif associé.

Les flux de données peuvent être des flux multimédias. Ceux-ci comprennent typiquement des flux (ou contenus) vidéo ou audio-vidéo. Il peut également s'agir de flux audio (musique, émissions radio...), ou de contenus interactifs (y compris jeux). Il peut s'agir de contenu à la demande ou de contenu « en direct » ou « live ». Ce mode de transmission peut être un mode de transmission de type « IPTV » (sigle de « Internet Protocol Télévision » en anglais), mais d'autres modes de transmission sont bien évidemment envisageables.

D'une façon générale, les contenus sont découpés en segments.

Lorsqu'un mode de téléchargement adaptatif de type ABR (« Adaptive Bit Rate ») est mis en oeuvre, les segments peuvent être disponibles en plusieurs résolutions. Un fichier dit « manifeste » permet aux dispositifs de lecture, T, de choisir une résolution en fonction notamment de leur environnement local.

Ces résolutions correspondent à des qualités du contenu vidéo (et/ou audio) et conséquemment à des débits différents sur le réseau de télécommunication.

Les qualités disponibles en ABR peuvent varier en fonction de la plateforme de streaming vidéo utilisée, mais en général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

Il est important de noter que les qualités disponibles peuvent varier en fonction des capacités de bande passante de l'utilisateur et du réseau, ainsi que de la qualité et de la complexité du contenu vidéo diffusé. Le fichier « manifeste » peut alors être modifié en fonction des variations effectuées au niveau du réseau ou du serveur de contenu.

Ce contenu peut être initialement disponible sur une source DIF.

Cette source est connectée à un réseau de diffusion de contenu, CDN (pour « Content Delivery Network »), qui forme, en quelque sorte, une surcouche (ou « overlay » en anglais), au réseau de télécommunication, NET, tel qu'Internet.

Le réseau de diffusion de contenu CDN comporte un ou plusieurs serveurs de contenus distincts, Su, S_{M}. Un premier serveur Su peut par exemple être un serveur unicast et un second serveur S_{M} peut être un serveur multicast.

Typiquement, les segments de la source DIF sont transmis à un premier serveur unicast, et à un second serveur multicast. Le serveur multicast, ou « multicasteur », peut recevoir les segments du serveur unicast Su lorsqu'une décision est prise de rendre possible la transmission en multicast. Cette décision peut par exemple être prise par le premier serveur de contenu, Su, ou par un dispositif de supervision, non représenté, ayant connaissance du nombre de dispositifs de lecture souhaitant recevoir un contenu donné.

Le réseau de diffusion de contenu CDN comporte également des équipements terminaux. Ces équipements terminaux peuvent former une passerelle G entre le réseau public sur lequel le réseau de diffusion de contenu CDN est déployé et un réseau privé auquel sont raccordés différents dispositifs de lecture de contenu, T.

Ce réseau local peut être un réseau installé chez un utilisateur (réseau domestique) lui permettant de connecter différents équipements, ou dispositifs de lecture de contenu, à la fois entre eux et à la passerelle vers le réseau public. Un tel réseau local peut être conforme à différentes technologies, par exemple Wi-Fi, Ethernet^{™}, Bluetooth, etc., ou à une combinaison de plusieurs de tels réseaux.

Comme évoqué précédemment, le serveur unicast Su fournit des fichiers manifestes aux dispositifs de lecture T à travers les passerelles G respectives. A partir de ces fichiers manifestes, les dispositifs de lecture T peuvent envoyer des requêtes pour télécharger un segment de la résolution choisie parmi celles disponibles dans le manifeste.

Plus précisément, les dispositifs de lecture peuvent accéder aux manifestes et aux segments de contenu à travers des entités de gestion qui peuvent, par exemple, être embarquées sur ces passerelles G.

Les passerelles G peuvent donc regrouper différentes fonctions. Toutefois, selon d'autres modes de réalisation, ces fonctions peuvent réparties au sein de différents équipements (qui peuvent alors constituer une passerelle distribuée).

Le serveur multicast S_{M} transmet les segments dans un arbre de diffusion, indépendamment des dispositifs de lecture T inscrits pour leur obtention. Les noeuds de l'arbre de diffusion prennent en charge la transmission jusqu'aux feuilles constitués par les entités de gestion.

Selon un mode de réalisation, on considère que ces entités de gestion sont embarquées dans les passerelles G. Elles peuvent notamment être mis en oeuvre par un ensemble de modules logiciels déployés sur un (ou plusieurs) processeur contenu dans cette passerelle.

Ces entités de gestion peuvent fournir des manifestes aux dispositifs de lecture de contenu T, en fonction des flux de segments multicast auxquels elles se sont inscrites. Du point de vue de ces dispositifs de lecture, T, ces entités de gestion forment donc l'entrée du réseau de diffusion de contenu, CDN. Une telle entité de gestion peut ainsi correspondre à la terminologie « nano CDN » ou « n-CND », connue de l'homme du métier, celle-ci ne concernant toutefois dans cette acception que l'accès aux flux multicast.

Un procédé proposé est un procédé de gestion de l'accès, par un dispositif de lecture T, à des segments d'un contenu accessibles depuis des serveurs de contenu, S_{U}, S_{M}. Ce procédé comprend un démarrage de l'obtention de segments depuis un premier serveur, Su, et une poursuite de l'obtention de segments depuis un second serveur, S_{M}, lorsqu'une condition sur un environnement du dispositif du dispositif de lecture T est atteinte.

Ce procédé permet ainsi une grande flexibilité dans le basculement entre un premier et un second serveur de contenu.

Selon un mode de réalisation le premier serveur est un serveur unicast, Su, et le second serveur est un serveur multicast, S_{M}.

Ainsi, dans un premier temps, le dispositif de lecture T reçoit des segments d'un client unicast, puis, au bout d'un certain temps, il peut être connecté à un serveur multicast qui lui transmet les segments suivants. De la sorte, il n'est pas nécessaire d'attendre la connexion à l'arbre de distribution pour que le dispositif de lecture T puisse commencer à recevoir des segments du contenu souhaité.

La récupération du premier segment en unicast est plus rapide qu'en MultiCast. En effet pour récupérer le premier segment en multicast, comme il sera vu plus loin, il faut préalablement s'abonner à une chaine en s'abonnant à un groupe de diffusion (IGMP Join) et que le flux soit descendu. Il est donc très intéressant de récupérer les premiers segments en unicast de façon à pouvoir démarrer le plus rapidement possible la lecture puis basculer ensuite en multicast pour bénéficier d'un gain de bande passante dans le réseau de l'opérateur.

Les segments peuvent être récupérés à un rythme plus élevé que le rythme de consommation pour leur production à l'utilisateur, notamment pour leur affichage sur un écran associé au dispositif de lecture T. Les segments sont stockés dans une mémoire tampon (ou « buffer ») associée au dispositif de lecture T. Le nombre de segments stockés peut varier au cours du temps en fonction du rythme de consommation (normalement constant) et du rythme d'acquisition (qui peut dépendre à la fois du réseau de la transmission entre le serveur de contenu et la passerelle G et de l'environnement du dispositif de lecture T, y compris sa connexion à la passerelle G).

Une fois un nombre suffisant de segments est stocké, l'obtention des segments peut se poursuivre depuis le serveur multicast. Le temps nécessaire à la connexion à l'arbre de diffusion multicast est alors absorbé par le temps avant ce basculement et le stockage d'un nombre suffisant de segments dans la mémoire tampon associé au dispositif de lecture T. Autrement dit, la profondeur de la mémoire tampon permet d'absorber le temps nécessaire au basculement vers le serveur multicast.

De la sorte, le basculement d'un serveur à un autre (notamment d'un serveur unicast vers un serveur multicast) est fluide et transparent pour l'utilisateur du dispositif de lecture T. Notamment, le contenu audio-visuel est produit sans interruption.

Le figure 2 illustre un chronogramme pour un exemple de mise en oeuvre d'un procédé entre un dispositif de lecture T, une passerelle G, un premier serveur de contenu, unicast, Su et un second serveur de contenu, multicast, S_{M}.

Dans un premier temps, le dispositif de lecture T transmet une requête m₁ à la passerelle en identifiant un contenu souhaité. La requête m₁ peut identifier un segment particulier à obtenir.

A ce stade, les segments de contenu sont obtenus depuis le premier serveur de contenu, Su.

Une entité de gestion, embarqué dans la passerelle G, peut être en charge de déterminer auprès de quel serveur les segments demandés par un dispositif de lecture T doivent être obtenus.

Cette détermination peut être effectuée par la vérification d'une condition sur l'environnement du dispositif de lecture T. Cet environnement peut être caractérisé par différents facteurs. En particulier, ils peuvent porter sur le dispositif de lecture T lui-même, et/ou sur l'utilisateur ou bien l'application de lecture utilisée et ses paramètres de configuration, et/ou sur le réseau de communication reliant le dispositif de lecture T à la passerelle G.

Par exemple, une condition peut porter sur des informations associées aux segments obtenus par le dispositif de lecture. En particulier, ces informations peuvent porter sur les segments obtenus présents dans la mémoire tampon associé au dispositif de lecture T.

Ces informations peuvent être un nombre de segments obtenus ou un temps calculé à partir de ces segments, connaissant la durée de chaque segment. La condition peut alors consister à comparer ce nombre, ou ce temps, avec un seuil.

Ce seuil peut être fixe, mais il peut aussi dépendre de l'utilisateur ou de l'application de lecture qui lit les segments de contenu à destination de l'utilisateur.

Ainsi, cette condition peut porter un besoin applicatif ou lié à l'utilisateur d'être plus ou moins proche du temps-réel : par exemple dans le cas d'une retransmission en direct d'une compétition sportive, il peut être souhaité que la lecture du contenu audio-vidéo ne soit retardé que d'un nombre minimal de segments par rapport à la source. Le seuil peut alors être fixé en fonction de ce besoin.

Également, une condition peut porter sur la stabilité du réseau de communication entre l'entité de gestion et le dispositif de lecture (par exemple un réseau Wi-Fi, ou autre technologie radio). Selon un mode de réalisation, on peut alors faire dépendre le seuil de ces aspects dynamiques de stabilité réseau.

D'autres conditions encore peuvent être bien évidemment prévues, qui vont par exemple faire évoluer le seuil au cours du temps. Mais d'autres conditions ou d'autres modes de réalisation peuvent ne pas faire dépendre la condition d'une comparaison à un seuil.

Par ailleurs, la condition à vérifier pour déclencher le basculement vers le second serveur de contenu peut comporter une ou plusieurs de ces conditions.

A la réception du message m₁, l'entité de gestion de la passerelle G, déclenche un traitement A1 de vérification de la condition prévue. Dans cet exemple, on suppose que la condition n'est pas vérifiée, par exemple parce que le dispositif de lecture ne dispose pas suffisamment de segments stockés dans la mémoire tampon.

Selon un mode de réalisation, le dispositif de lecture T transmet des informations sur son environnement à l'entité de gestion. En particulier, elle peut lui transmettre des informations associées aux segments obtenus par le dispositif de lecture (un nombre de segments stockés dans la mémoire tampon par exemple).

Ces informations peuvent être transmises dans un même message m₁ que la requête de segment.

Une fois avoir vérifié que la condition n'est pas remplie, l'entité de gestion transmet une requête m₂ vers le serveur choisi, ici le premier serveur Su en identifiant le segment demandé par le dispositif de lecture T.

Dans un message m₃, le premier serveur Su transmet ce segment à la passerelle G, qui, dans un message m₄, la retransmet au dispositif de lecture T. Ce dernier peut stocker ce segment dans la mémoire tampon où il sera « consommé » par une application de lecture de contenu audio-vidéo.

Le dispositif de lecture T peut transmettre une nouvelle requête, m₅, d'un nouveau segment. Le dispositif de lecture, ou plus précisément, l'application de lecture déployé sur ce dispositif, peut être responsable de déclencher cette nouvelle requête m₅. Dans un exemple de réalisation, cette requête m₅ peut être transmise avec des informations sur les segments stockées dans sa mémoire tampon.

En A₂, l'entité de gestion de la passerelle G peut vérifier à nouveau si la condition est vérifiée.

On suppose que le dispositif de lecture T dispose déjà d'au moins un segment précédemment obtenu et stocké dans sa mémoire tampon, mais que le nombre de segments ou bien que la durée correspondant à ces segments n'est pas suffisant. Comme précédemment, le caractère suffisant ou non-suffisant peut être déterminé par une comparaison à un seuil prédéfini.

La condition prévue n'est ainsi pas remplie, et il est décidé de continuer à obtenir les segments depuis le premier serveur de contenu, c'est-à-dire le serveur de contenu unicast Su.

L'entité de gestion transmet une requête m₆ vers le premier serveur de contenu Su en identifiant le segment demandé par le dispositif de lecture T.

Dans un message m₇, le premier serveur Su transmet ce segment à la passerelle G, qui, dans un message m₈, la retransmet au dispositif de lecture T. Ce dernier peut stocker ce segment dans la mémoire tampon où il sera « consommé » par une application de lecture de contenu audio-vidéo.

Le dispositif de lecture T peut transmettre une nouvelle requête, m₉, d'un nouveau segment. Dans un exemple de réalisation, cette requête m₉ peut être transmise avec des informations sur les segments stockées dans sa mémoire tampon.

L'entité de gestion de la passerelle G peut vérifier à nouveau si la condition est vérifiée.

On suppose cette fois-ci que la condition prévue est vérifiée, c'est-à-dire que le dispositif de lecture T a transmis des informations indiquant qu'il dispose d'un nombre de segments, ou d'une durée correspondant à ces segments, suffisant par rapport à un seuil prédéfini.

Cette condition étant vérifiée, l'entité de gestion peut déclencher un basculement vers une poursuite de l'obtention des segments depuis le second serveur de contenu, c'est-à-dire le serveur de contenu multicast, S_{M}. L'entité de gestion de la passerelle G peut alors transmettre un message m₁₀ de requête d'un nouveau segment (en identifiant le segment souhaité) vers le second serveur de contenu S_{M}.

Autrement dit, ce basculement peut générer un changement du mode d'obtention depuis un mode unicast vers un mode multicast.

Le basculement vers un mode multicast peut dépendre de la technologie multicast utilisée.

En mode multicast, les terminaux, par exemple l'entité de gestion de la passerelle G, intéressés par la réception d'un contenu doivent joindre un groupe de terminaux ayant requis un abonnement au même contenu en utilisant, par exemple, un protocole IGMP (Internet Group Management Protocol) s'il s'agit de terminaux IPv4 ou le protocole MLD (Multicast Listener Discovery) s'il s'agit de terminaux IPv6. En effet, un terminal doit être membre d'un groupe pour recevoir un flux multicast donné.

Le protocole IGMP peut être conforme, dans sa version 3, au RFC 3376 de l'IETF.

Selon ce protocole, l'entité de gestion envoie un message à un routeur « de rendez-vous » RP (pour « Rendezvous Point » en anglais) pour s'abonner au groupe multicast correspondant au contenu souhaité par le dispositif de lecture T. Ce message peut être un message « IGMP Membership Report ».

Ce routeur de rendez-vous est choisi dans un arbre de distribution du contenu multicast en fonction de critère topologique. Typiquement, l'entité de gestion s'abonne auprès d'un routeur RP le plus proche, afin que la transmission du contenu entre la source de contenu et ce routeur RP soit la plus longue possible, afin d'optimiser la mutualisation des transmissions.

Le routeur RP maintient une table des membres du groupe multicast. Lorsqu'il reçoit des données multicast, il les envoie uniquement aux entités qui se sont abonnés au groupe. Ainsi, après abonnement, l'entité de gestion peut commencer à recevoir les segments en mode multicast.

Ce processus, illustré schématiquement par l'étape A₃ sur la figure 2, peut entraîner un temps substantiel et incertain.

Toutefois, selon le procédé proposé, assujettir le déclenchement du basculement vers un mode multicast au respect d'une condition sur les segments déjà obtenus (et stockés dans la mémoire tampon du dispositif de lecture) permet de se prémunir d'une famine du dispositif de lecture, c'est-à-dire de l'absence momentanée de segments à lire et produire, dans l'attente de la réception des segments selon le mode d'obtention multicast.

Le second serveur de contenu S_{M} (c'est-à-dire le serveur multicast) peut transmettre un segment dans l'arbre de distribution, et ce segment peut ainsi être obtenu par le l'entité de gestion de la passerelle G (message m₁₁).

A réception d'un segment, l'entité de gestion retransmet le segment obtenu vers le dispositif de lecture, dans un message m₁₂. Cette transmission peut être effectuée en mode unicast puisqu'il s'agit d'une transmission entre deux parties uniquement.

Classiquement, la transmission en multicast permet d'alléger la charge du réseau de télécommunication de l'opérateur. En outre le temps d'abonnement à la chaîne en mode multicast ne provoque pas de gel (ou « freeze » en anglais) de la lecture du contenu vidéo sur le dispositif de lecture T. On tire ainsi profit des avantages du mode d'obtention multicast mais sans souffrir des inconvénients qui peuvent apparaitre dans les mécanismes de l'état de la technique.

Ce mécanisme proposé peut s'appliquer à d'autres types de serveurs qu'un couple de serveurs unicast/multicast. Il s'applique notamment au cas général où le basculement d'un premier serveur à un second serveur est susceptible d'entraîner une interruption temporaire de l'obtention de segments par le dispositif de lecture, par exemple du fait d'un délai d'établissement de la connexion avec le second serveur.

Le mécanisme proposé permet de se prémunir de ce lapse de temps de basculement l'assujettissant à une condition sur l'environnement du dispositif de lecture. Notamment, selon un de mode de réalisation, ce basculement est conditionné à un contenu suffisant dans sa mémoire tampon, afin que le dispositif de lecture puisse continuer à lire le contenu, en utilisant la mémoire tampon, pendant le délai d'établissement. On peut ainsi garantir que la mémoire tampon ne sera pas vidé avant l'établissement de la connexion avec le second serveur, de sorte qu'il n'y aura pas d'interruption de la lecture. De la sorte, le basculement entre le premier et le second serveur de contenu apparait transparent pour les utilisateurs du dispositif de lecture T.

Il est également possible de prendre en compte d'autres conditions sur l'environnement du dispositif de lecture T, afin que le basculement vers le second serveur de contenu ne soit effectué que lorsque cet environnement corresponde à des requis associés au second serveur.

Bien entendu, la présente invention n'est pas limitée aux exemples et au mode de réalisation décrits et représentés. Elle est notamment susceptible de nombreuses variantes accessibles à l'homme de l'art. 1

## Revendications

1. Procédé de gestion de l'accès par un dispositif de lecture (T) à des segments d'un contenu accessibles depuis des serveurs de contenu (Su, SM), comprenant un démarrage de l'obtention de segments depuis un premier serveur (Su), et une poursuite de l'obtention de segments depuis un second serveur (S_{M}) lorsqu'une condition sur un environnement dudit dispositif de lecture (T) est atteinte.

2. Procédé selon la revendication précédente, dans lequel ledit premier serveur est associé à un mode d'obtention unicast, et/ou ledit second serveur est associé à un mode d'obtention multicast.

3. Procédé selon l'une des revendications précédentes, dans lequel ladite condition sur l'environnement dudit dispositif de lecture comprend une condition sur des informations associées aux segments obtenus par ledit dispositif de lecture (T).

4. Procédé selon la revendication précédente, dans lequel ledit dispositif de lecture transmet des informations sur son environnement à une entité de gestion, et ladite entité de gestion détermine si ladite condition est atteinte en fonction desdites informations.

5. Procédé selon la revendication précédente, dans lequel lesdites informations comprennent une durée associée aux segments présents dans une mémoire tampon dudit dispositif de lecture.

6. Procédé selon la revendication précédente dans lequel lesdites informations sont transmises avec des requêtes de segments transmises par ledit dispositif de lecture.

7. Entité de gestion de l'accès par un dispositif de lecture (T) à des segments d'un contenu accessibles depuis des serveurs de contenu (Su, S_{M}), comprenant un processeur configuré pour réaliser un démarrage de l'obtention de segments depuis un premier serveur, et une poursuite de l'obtention de segments depuis un second serveur lorsqu'une condition sur un environnement dudit dispositif de lecture est atteinte.

8. Passerelle (G) comportant une entité de gestion selon la revendication précédente.

9. Programme d'ordinateur apte à être mis en oeuvre sur une entité de gestion, le programme comprenant des instructions de code qui, lorsqu'il est exécuté par un processeur, réalise les étapes du procédé définie dans les revendications 1 à 6.

10. Support de données sur lequel a été mémorisé au moins une série d'instructions de code de programme pour l'exécution d'un procédé selon l'une des revendications 1 à 6.] 1
